# EUROPEAN PATENT APPLICATION

(11) **EP 1 035 393 A1**
(43) Date of publication of application: **13.09.2000**
(21) Application number: 00104879.2
(22) Date of filing: 07.03.2000
(51) Int. Cl.: F27B 9/30

(54) **Continuous kiln for heat treatment of materials**

(30) Priority: 08.03.1999 IT BO990109
(71) Applicant: Tecnochimica Sassolese S.r.l., 41043 Formigine (Modena) (IT)
(72) Inventor: Zavatti, Roberto, deceased (IT)
(74) Representative: Dall'Olio, Giancarlo

(57) **Abstract**

The continuous kiln for heat treatment of articles, such as ceramic articles includes a controlled temperature heat treatment chamber (3) designed for receiving materials to be treated. A plurality of burners (4) are associated to the heat treatment chamber (3), so as to generate increasing temperatures thereinside. A roller conveyor (5) extends between the inlet end (3a) and the outlet end of the heat treatment chamber (3). The kiln includes also means (6) for collecting exhaust fumes, and releasing means (7), which communicate with said collecting means (6), so as to expel the exhaust fumes in the atmosphere. The collecting means (6) communicate with the heat treatment chamber (3) in the region of intake mouths (9a, 9b), situated in an intermediate area (3b) of the heat treatment chamber (3). The intermediate area (3b) has a constant temperature (T1) higher or equal to the burning temperature of toxic and/or polluting substances present inside the chamber (3).

## Description

The present invention relates to heat treatment of articles for modifying and improving their physical and structural characteristics.

In particular, the present invention relates to an improved continuous kiln for heat treatment of these materials.

Many articles of common use, as well as for particular industrial use, must be heat treated, so as to define and/or improve some of their physical and structural characteristics.

For instance, the heat treatment is necessary in production of ceramic articles like tiles, sanitary fixtures, or in production of components of sintered ferrite used in electronics.

Moreover, the heat treatment is used in many other cases in which a high temperature treatment is required.

There are also different types of kilns, in which heat treatments are executed.

One of the most used is the so-called continuous kiln, i.e. a kiln, in which the heat treatment is gradual, the material to be treated is introduced into a "cold" end of the kiln, then it passes thereinside toward the hotter And hotter areas and finally, it is withdrawn from the "hot" end of the kiln.

The temperature inside the kiln usually varies from about 300°C to above 1500°C.

Actually, kilns of this type have usually the shape of a modular tunnel and are equipped with a plurality of burners.

The burners are spaced out along the tunnel, so as to create a temperature gradient therealong, which increases in a more or less linear way.

This allows to obtain a gradual increase of the temperature of the treated materials, which is particularly advantageous for the treatment quality.

The exhaust fumes are collected at the cold end of the kiln, and then sent to a chimney to be dispersed in the atmosphere.

Substantially, a current is thus created, so as to carry the exhaust fumes from the hot end of the kiln toward the cold one, in direction opposite to the transport direction of the materials being treated.

In this way only a minimum quantity of heat is dispersed in the atmosphere together with the exhaust fumes.

A considerable disadvantage of the above described kiln derives from the fact that exhaust fumes very often contain highly toxic and/or polluting chemical substances, produced in the kiln coldest area or released by the materials during the first steps of heat treatment.

For instance, during tiles treatment, organic substances present in the paints used for decorating the tiles or in the glues used for the first decoration gluing, are released.

In fact, fixing agents containing polyglycolic substances are very often used to facilitate the fixing of the decoration (for instance, the product commonly known with the brand name Vinavyl).

The dispersion oils of enamels are also composed of polyglycolic substances of big molecular weight.

Also waxes, suitably mixed with raw materials devoid of plasticity, are used for giving the shape and stability during the pressing.

Moreover, the exhaust fumes contains very often aldehydes, which are highly cancerogenous.

The anti-pollution regulations in all industrialised countries require severe reduction of the emission of such products, and there are particularly heavy fines for those who do not respect the limits.

Nowadays, the polluting substances in the exhaust fumes of continuous kilns are substantially reduced by two techniques.

According to the first one, activated carbon filters are used. However, this kind of filters are very expensive, must be substituted very often and, anyway, they are not completely efficient.

The other used technique takes advantage of the fact that all above described polluting substances "burn", and therefore are degraded, in a temperature above 600°C.

Therefore, to decrease the fumes a post-combustion group is provided in correspondence to the exhaust fumes conveying chimney, so as to bring the exhaust fumes temperature above the burning temperature of the polluting substances.

The post-combustion group is rather expensive, and its operation must be set in relation to the outer temperature.

Moreover, the post-combustion group needs a long time (about 3 hours) to work at full capacity.

The object of the present invention is to propose a continuous kiln for materials heat treatment, which produces exhaust fumes to be dispersed in atmosphere completely devoid of above mentioned toxic and/or polluting substances, without using filters or post-combustion groups.

Another object of the present invention is to propose a continuous kiln, which substantially maintains the heat efficiency of a traditional kiln.

The above mentioned objects are fully obtained in accordance with the contents of claims.

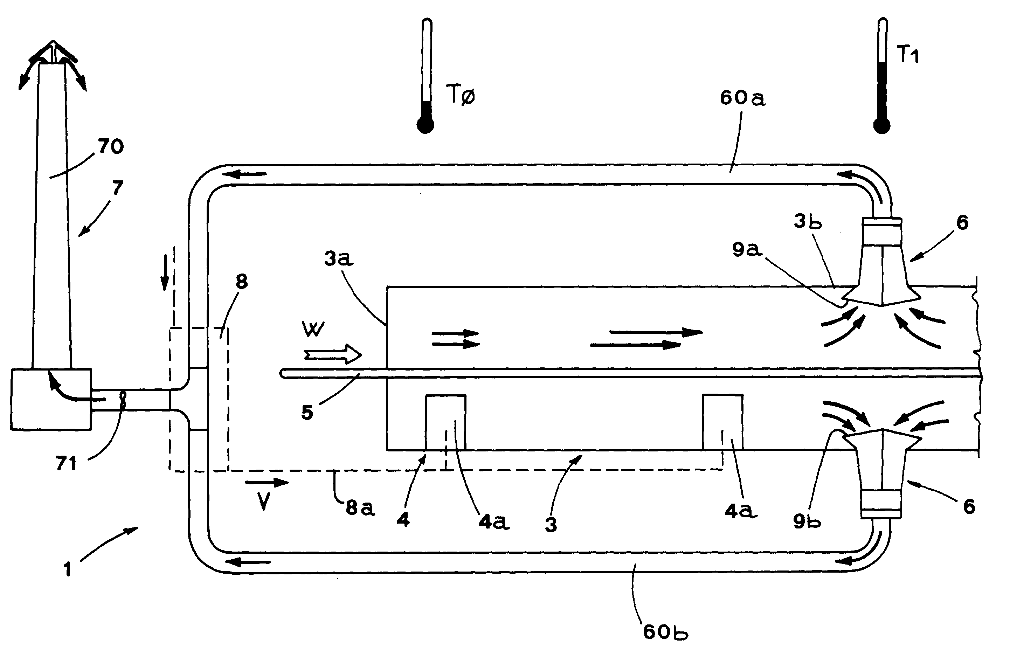

The characteristic features and advantages of the present invention will become fully apparent from the following detailed description taken in conjunction with the accompanying drawing, which shows a schematic view of a significant part of the improved kiln, obtained according to the present invention.

With reference to the above described figure, the reference numeral 1 indicates a continuous kiln for heat treatment of materials. e.g. ceramic articles or components of sintered ferrite.

The kiln includes a tunnel-like, controlled temperature, heat treatment chamber 3, only a part of which, inherent to the present description, is shown for sake of clarity.

Actually, the heat treatment chamber 3, as well as devices connected thereto, have been made according to known techniques and therefore, will not be described in detail.

Materials to be heat treated are fed to the heat treatment chamber 3 by an aperture made in the region of an inlet end 3a of the heat treatment chamber 3.

The heat treatment chamber 3 is connected with a heat generator 4, which generates and maintains thereinside a temperature which increases beginning from the inlet end 3a, in a predetermined way and in relation to the type of material to be treated.

Usually, the temperature T0, near the inlet end 3a, is maintained at the level ranging between 200°C and 300°C; the highest temperature, depending on the type of the raw materials to be sintered, and consequently, on the desired final product, usually ranges from 1200°C to 1500°C in the area of the opposite end of the chamber 3.

The heat generator 4 includes a plurality of burners 4a of known type, situated along the sides of the heat treatment chamber 3.

The distance between one burner 4a and a subsequent one is calculated, so as to allow best reaching of desired temperature increase.

The continuous kiln 1 includes also conveying means 5 for materials to be treated, which introduce the materials into the heat treatment chamber 3 and convey them thereinside in a direction W toward hotter and hotter areas, at a speed depending on the required treatment duration.

The conveying means 5 usually include a conveyor, either of roller type or of carriage type, which extends along the whole chamber 3 length and for at least a short piece immediately upstream of the inlet end 3a and downstream of the outlet end.

The material to be treated is laid on the surface of the conveyor 5.

The kiln 1 includes also means 6, which collect the exhaust fumes produced inside the heat treatment chamber 3 by the burners 4a and convey them outside the chamber 3.

The collecting means 6 include a pair of flues 60a, 60b, communicating with the chamber 3 inside by respective intake mouths 9a, 9b, situated in the chamber 3 intermediate area, where the temperature T1, ranges from 450°C to 600°C.

This temperature corresponds to the temperature of burning, and consequently degrading of toxic and/or polluting substances which are released by the materials during the heat treatment cycle.

The flues 60a, 60b are connected to releasing means 7, which receive and expel the exhaust fumes to the atmosphere, with the interposition of a heat exchanger 8.

The releasing means 7 include a chimney 70 of traditional type, equipped with a fan 71, through which the exhaust fumes of high temperature is let into the atmosphere at a suitable distance from the ground.

The heat exchanger 8, indicated in the figure schematically with a broken line, takes heat from the exhaust fumes and transfers it to an air flow, which is conveyed in a direction V along a feeding pipe 8a, likewise indicated with broken line.

The feeding pipe 8a connects the heat exchanger 8 with the air intakes of the burners 4a.

The heat exchanger 8 is not strictly necessary for operation of the kiln 1, its only task is to improve the kiln energetic efficiency.

The operation of the continuous kiln 1 obtained according to the present invention is easy to understand.

The activation of the burners 4a produces, inside the heat treatment chamber 3, a temperature gradient, which increases more or less constantly.

The time necessary for the kiln to work at full capacity is usually less than one hour.

The coldest area of the heat treatment chamber 3 is situated near the inlet end, and is usually maintained at the temperature T0 ranging between 200°C and 300°C.

The hottest area is situated in the region of the opposite end and its temperature can reach 1500°C.

The materials to be heat treated are introduced continuously into the chamber 3 through the inlet end 3a by a roller or carriage conveyor 5, and are conveyed through gradually hotter areas of the chamber 3, at predetermined speed in direction W, until the opposite end of the chamber 3, when the heat treatment is completed.

As it has been already mentioned, during the heat treatment, the materials release different toxic and/or polluting substances, which burn in temperature below or equal to 600°C.

Therefore, these substances are present only in the part of the chamber 3, where the temperature is kept at a lower level.

The exhaust fumes are collected up by the chimney 70 through the flues 60a, 60b.

It is to be noted that the collected exhaust fumes are completely devoid of the above mentioned toxic and/or polluting substances, since the gas temperature T1 in the picking up area is higher or equal to the temperature, in which these organic substances burn.

Due to this, further filters and/or post-combustion groups are completely unnecessary.

A flow of air is created inside the chamber 3. In the part of the chamber situated upstream of the intake mouths 9a, 9b, the flow of air moves in the same direction W as the materials being treated.

On the contrary, in the part of the chamber situated downstream of the intake mouths, the flow of air moves in the direction opposite with respect to the material movement direction W.

Thus, the exhaust fumes passe through the heat exchanger 8, inside which they give a part of heat to the air feeding the burners 4a, pre-heating it.

The heat exchanger 8 is not fundamental for the kiln operation, but it allows to improve the kiln energetic efficiency.

Finally, downstream of the heat exchanger 8, the exhaust fumes reaches the chimney 7, through which it is dispersed into the atmosphere.

The advantages of the present invention become evident from the above structural and functional description.

First of all, the exhaust fumes are collected in the area of the heat treatment chamber where all the toxic and/or polluting substances released by the treated materials have been already burnt. Therefore, the gas dispersed in atmosphere is completely devoid of these substances.

Moreover, this effect is obtained without, expensive activated carbon filters or post-combustion groups, which results in a considerable reduction of production cost as well as of kiln maintenance cost.

Finally, the heat exchanger allows to maintain the kiln energetic efficiency almost the same as the efficiency of a corresponding traditional continuous kiln equipped with activated carbon filters.

It is understood that the description supplied herein is solely an unlimited example, such that possible variations in the construction details will not affect the protective framework afforded to the invention as described above and claimed hereinafter.

## Claims

1. Improved continuous kiln for heat treatment of articles, including:
at least one controlled temperature heat treatment chamber (3) for receiving materials to be treated in at an inlet end (3a) and for keeping the materials thereinside during the heat treatment;
heat generating means (4), connected to said heat treatment chamber (3) and aimed at generating and maintaining thereinside a temperature, which increases, beginning from the inlet end (3a), in a predetermined way;
means (5) for conveying said materials to be treated, said conveying means (5) extending between said inlet end (3a) and an outlet end of said heat treatment chamber (3), and being aimed at conveying said materials inside said heat treatment chamber (3), from said inlet end (3a) toward areas of the chamber having increasing temperatures;
collecting means (6) which communicate with the inside of said heat treatment chamber (3) and are aimed at collecting exhaust fumes produced by said heat generating means (4);
releasing means (7), which communicate with said collecting means (6) and are aimed at receiving said exhaust fumes therefrom and releasing them in the atmosphere;
said kiln characterised in that said means (6) for collecting the exhaust fumes communicate with said heat treatment chamber (3) in the region of at least one intake mouth (9a,9b), situated in an intermediate area (3b) of said heat treatment chamber (3), with said intermediate area (3b) having a constant temperature (T1) higher or equal to the burning temperature of toxic and/or polluting substances present inside said chamber (3).

2. Continuous kiln according to claim 1, characterised in that said collecting means (6) include at least one flue (60a,60b) extending between said intake mouth (9a,9b) and said releasing means (7).

3. Continuous kiln according to claim 1, characterised in that the temperature in said intermediate area (3b) ranges from 450°C to 600°C.

4. Continuous kiln according to claim 1, characterised in that it includes also at least one heat exchanger (8), which is situated between said means (6) for collecting the exhaust fumes and said releasing means (7), said heat exchanger being aimed at taking a part of heat contained in said exhaust fumes and at using it to pre-heat the air feeding said heat generating means (4).

5. Continuous kiln according to claim 4, characterised in that it includes at least one feeding pipe (8a), which extends between said heat exchanger (8) and heat generating means (4) and which is aimed at convey said pre-heated air toward said heat generating means (4).
